# EUROPÄISCHE PATENTSCHRIFT

(11) **EP 1 334 621 B1**
(45) Veröffentlichungstag und Bekanntmachung des Hinweises auf die Patenterteilung: **01.09.2004**
(21) Anmeldenummer: 01989437.7
(22) Anmeldetag: 03.11.2001
(51) Int. Cl.: H04N 7/50

(54) **VERFAHREN UND VORRICHTUNG ZUR AUFZEICHNUNG VON KODIERTEN DIGITALEN AUDIOVISUELLEN DATEN**
METHOD AND DEVICE FOR RECORDING CODED DIGITAL AUDIOVISUAL DATA
PROCEDE ET DISPOSITIF D'ENREGISTREMENT DE DONNEES NUMERIQUES AUDIOVISUELLES CODEES

(30) Priorität: 10.11.2000 DE 10055937
(43) Veröffentlichungstag der Anmeldung: 13.08.2003
(73) Patentinhaber: Grundig Multimedia B.V., 1083HJ Amsterdam (NL)
(72) Erfinder: TÖDTMANN, Thorsten, 90537 Feucht (DE)
(74) Vertreter: Pröll, Jürgen
(86) Internationale Anmeldenummer: PCT/EP2001/012762
(87) Internationale Veröffentlichungsnummer: WO 2002/039749

(56) Entgegenhaltungen:
- EP-A- 0 680 152
- EP-A- 0 802 682
- WO-A-00/59234
- KONDO S ET AL: "ONE-PASS VARIABLE BIT RATE MPEG2 VIDEO CODING METHOD FOR DIGITAL VIDEO RECORDING" JAPANESE JOURNAL OF APPLIED PHYSICS, PUBLICATION OFFICE JAPANESE JOURNAL OF APPLIED PHYSICS. TOKYO, JP, Bd. 37, Nr. 4B, 1998, Seiten 2231-2235, XP000885326 ISSN: 0021-4922
- YOKOYAMA Y ET AL: "A scene-adaptive one-pass variable bit rate video coding method for storage media" PROCEEDINGS. INTERNATIONAL CONFERENCE ON IMAGE PROCESSING, XX, XX, Bd. 3, 24. Oktober 1999 (1999-10-24), Seiten 827-831, XP002143576

## Beschreibung

Die vorliegende Erfindung betrifft ein Verfahren und eine Vorrichtung zur Aufzeichnung von codierten digitalen audiovisuellen Daten.

Es ist bekannt, codierte digitale audiovisuelle Daten auf Massenspeichermedien wie Festplatte (Hard Disk, HD) oder beschreibbaren optischen Speichern zu speichern. Üblicherweise sind die codierten digitalen audiovisuellen Daten zur Datenreduzierung mittels bekannter Codierverfahren codiert, z. B. nach einem der MPEG-Standards. Für die Übertragung, z. B. mittels Rundfunk- oder Satellitensignal, werden die codierten digitalen audiovisuellen Daten mehrerer Programmbeiträge zu einem Transportdatenstrom zusammengefaßt. Um die codierten digitalen audiovisuellen. Daten eines bestimmten Programmbeitrags, z. B. eines Films oder einer Live-Übertragung eines Ereignisses, aufzeichnen zu können, werden die den bestimmten Programmbeitrag repräsentierenden codierten digitalen audiovisuellen Daten aus dem Transprotdatenstrom isoliert.

Bei der Aufzeichnung der codierten digitalen audiovisuellen Daten tritt jedoch das Problem auf, daß Vorhersagen über die noch zur Verfügung stehende Aufzeichnungsdauer des verwendeten Massenspeichermediums nicht möglich sind, da wegen der verwendeten Codierung die Datenrate der codierten digitalen audiovisuellen Daten stark schwanken kann. Dies ist insbesondere bei den erwähnten Live-Ereignissen problematisch, weil keinerlei Vorhersage über die während der Zeitdauer des Live-Ereignisses anfallende Datenmenge möglich ist, so daß eine Bestimmung der noch verbleibenden Aufzeichnungszeit des Massenspeichermediums nicht vorgenommen werden kann. Aber auch bei bereits vollständig vorliegenden Programmbeiträgen, z. B. Filmen, steht die Information über die gesamte Datenmenge bzw. die jeweilige Restdatenmenge der codierten digitalen audiovisuellen Daten der Programmbeiträge nicht ohne weiteres während der Übertragung der jeweiligen Programmbeiträge zur Verfügung, da üblicherweise derartige Informationen nicht in den ausgesendeten Daten enthalten sind. Falls derartige Informationen während oder vor der Übertragung der Programmbeiträge zur Verfügung gestellt werden würden, könnte zwar für die erwähnten vollständig vorliegenden Programmbeiträge eine Aussage darüber gemacht werden, ob sie vollständig auf dem verwendeten Massenspeichermedium aufgezeichnet werden können, für die ebenfalls erwähnten Live-Ereignisse bleibt eine Vorhersage aber wegen der genannten Gründe unmöglich. Eine Möglichkeit stellt auch die Decodierung der codierten digitalen audiovisuellen Daten vor der Aufzeichnung dar. Damit wäre bei bekannter Dauer des Live-Ereignisses auch die aufzuzeichnende Datenmenge bekannt. Allerdings weist diese Lösung die Nachteile auf, daß der Vorteil der Codierung - die Reduzierung der aufzuzeichnenden Datenmenge - verloren geht, und daß zusätzlich ein De- und ein Encoder benötigt werden.

Das Dokument EP 0 802 682 offenbart ein Vorrichtung zur Aufzeichnung, wobei die ermittelte mithere Datenrate nicht auf dem Massenspeichermedium gespeichert wird.

Der bekannte Stand der Technik weist somit den Nachteil auf, daß Angaben über den benötigten Speicherbedarf eines Programmbeitrags allenfalls im Nachhinein gemacht werden können, d. h. nachdem ein Programmbeitrag vollständig vorliegt. Eine Aussage, ob ein Programmbeitrag vollständig auf einem verwendeten Massenspeichermedium aufgezeichnet werden kann, ist somit während bzw. vor der Aufzeichnung des Programmbeitrags nicht möglich.

Es ist daher Aufgabe der vorliegenden Erfindung, ein Verfahren und eine Vorrichtung zur Aufzeichnung von codierten digitalen audiovisuellen Daten anzugeben, die es erlauben, vor oder während einer Aufzeichnung eines Programmbeitrags Aussagen darüber zu ermöglichen, welchen Speicherbedarf die codierten digitalen audiovisuellen Daten des Programmbeitrags voraussichtlich haben.

Bei der vorliegenden Erfindung wird diese Aufgabe durch die Merkmale der Ansprüche 1 und 8 gelöst.

Bei der Erfindung wird dabei von der Überlegung ausgegangen, daß für die codierten digitalen audiovisuellen Daten Informationen über mittlere Datenraten von Programmbeiträgen ermittelt werden, die eine Aussage über die zu erwartende Datenmenge eines jeden Programmbeitrags ermöglichen.

Der Vorteil der Erfindung ist darin zu sehen, daß durch die Verwendung der mittleren Datenrate die zu erwartende Datenmenge eines jeden Programmbeitrags bestimmt bzw. geschätzt werden kann. Dadurch werden Aussagen über den. Speicherplatzbedarf der aufzuzeichnenden Programmbeiträge möglich. Dies wiederum macht es möglich, Aussagen zu machen, ob der noch zur Verfügung stehende Speicherplatz eines für die Aufzeichnung verwendeten Massenspeichermediums für die Aufzeichnung des Programmbeitrags ausreicht.

Weitere Vorteile der vorliegenden Erfindung ergeben sich aus den abhängigen Ansprüchen sowie der nachfolgenden Beschreibung einer Ausführungsform einer erfindungsgemäßen Vorrichtung anhand einer Figur.

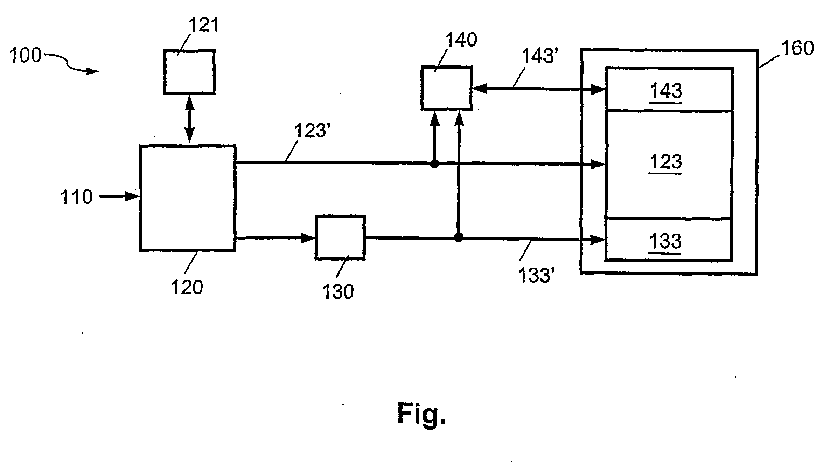

Die einzige Figur zeigt ein Prinzipschaltbild eines Ausführungsbeispiels einer Vorrichtung zur Aufzeichnung von codierten digitalen audiovisuellen Daten.

Zur Erleichterung des Verständnisses der vorliegenden Erfindung sind in der Figur nur die Bestandteile des Ausführungsbeispiels dargestellt, die im Zusammenhang mit der Erfindung von Bedeutung sind.

Die Figur zeigt ein Prinzipschaltbild eines Ausführungsbeispiels einer Vorrichtung 100 zur Aufzeichnung von digitalen audiovisuellen Daten, bei der Aufzeichnung codierter digitaler audiovisueller Daten. Die codierten digitalen audiovisuellen Daten können beispielsweise in einem DVB-Transportdatenstrom (DVB: Digital Video Broadcast) enthalten sein, der mehrere nach MPEG (MPEG: Motion Picture Expert Group) codierte digitale audiovisuelle Datenströme enthält. Jeder der codierten digitalen audiovisuellen Datenströme entspricht dabei beispielsweise einem Programmbeitrag, z. B. einem Film oder einer Übertragung eines Live-Ereignisses.

Die Vorrichtung 100 zur Aufzeichnung enthält einen Demultiplexer 120 (Transportdemultipfexer), zur Auftrennung eines Transportdatenstroms 110 in einzelne codierte digitale audiovisuelle Datenströme 123', welche jeweils einen Programmbeitrag repräsentieren und nachfolgend als Programmdaten bezeichnet werden. Die Programmdaten 123' enthalten im wesentlichen Audiodaten, Videodaten sowie weitere Daten. Die weiteren Daten beinhalten beispielsweise Teletext, elektronische Programmzeitschrift, Datenbanken zu Sendebeiträgen, wie Texte zu Hörspielen, Informationen zu Filmen, Details zu Schauspielem usw. Diese können beispielsweise separat dargestellt werden oder auch zusammen mit den Video- und/oder Audiodaten der Programmdaten 123'.

Für das Demultiplexen des Transportdatenstroms 110 wird von einer Einrichtung 121 zur Taktrückgewinnung ein Systemtakt aus dem Transportdatenstrom 110 zurückgewonnen. Die Programmdaten 123' werden in einem zweiten Bereich 123 eines Speichermediums 160, z. B. einer Festplatte (HD), eines beschreibbaren optischen Speichers oder eines geeigneten Festkörperspeichers, aufgezeichnet.

Der Transportdemultiplexer 120 liefert außerdem Informationen über den jeweiligen Programmbeitrag. Diese Informationen werden von einem Decoder 130 ausgewertet und Angaben wie Sendemamen, Start- und Endzeit, Herkunft, Art bzw. Genre des Progragrammbeitrags usw. werden zur Verfügung gestellt. Die Programminformationen 133' der Einrichtung 130 werden in einem dritten Bereich 133 der HD 160 aufgezeichnet.

Mittels einer Einrichtung 140, beispielsweise einem Mikrocomputer, an welcher die Programmdaten 123' sowie die Programminformationen 133', anliegen wird die jeweilige momentane Datenrate 143' der aufzuzeichnenden Programmdaten 123', sowie vorzugsweise die Datenrate der Programminformationen 133', die im Vergleich zur Datenrate der Programmdaten 123' gering ist, ermittelt und laufend in einem ersten Bereich 143 der HD 160 aufgezeichnet.

Für die im ersten Bereich 143 der HD 160 gespeicherten momentanen Datenraten wird nach Beendigung der Aufzeichnung eines Programmbeitrags eine gewichtete mittlere Datenrate durch die Einrichtung 140 bestimmt. Unter gewichtet ist hierbei zu verstehen, daß die Momentanwerte der Datenrate von der eigentlichen Mittelwertbildung mit einer von der Zeit und/oder dem genre abhängigen Kennlinie - ggf. nichtlinear - gewichtet werden. Ebenso ist es möglich, die gewichtete mittlere Datenrate durch laufende Auswertung der momentanen Datenrate während der Aufzeichnung eines Programmbeitrags zu bestimmen. Eine weitere Möglichkeit stellt die Ermittlung der gewichteten mittleren Datenrate nach der Aufzeichnung eines Programmbeitrags dar, wenn die dann bekannte Gesamtdatenmenge durch die Aufzeichnungsdauer dividiert wird. Dazu kann die Aufzeichnungsdauer entweder direkt durch die Einrichtung 140 ermittelt werden oder durch Auswertung der vom Decoder 130 stammenden Informationen über Start- und Endzeit des aufgezeichneten Programmbeitrags.

Die derart ermittelte gewichtete mittlere Datenrate des jeweiligen Programmbeitrags wird anschließend von der Einrichtung 140 mit den Informationen des Decoders 130 verknüpft und im ersten Speicherbereich 143 der HD 160 gespeichert. Die erzeugte Verknüpfung betrifft die Angaben Sendemamen und Genre bzw. Art des Programmbeitrags. Somit sind Aussagen möglich, welche gewichtete mittlere Datenrate ein bestimmter Sender hat. Ebenso ist es möglich bestimmten Programmbeiträgen, z. B. Spielfilmen, Dokumentationen, Sportsendungen usw., eine gewichtete mittlere Datenrate zuzuordnen. Die Qualität der ermittelten gewichteten mittleren Datenraten ist dabei davon abhängig, daß eine Vielzahl von Programmbeiträgen jeden Genres ausgewertet wird bzw. daß der Datenstrom eines Senders für einen längeren Zeitraum ausgewertet wird.

Bei einer Aufzeichnung eines Programmbeitrags ist es durch Auswertung der im ersten Speicherbereich 143 der HD 160 gespeicherten gewichteten mittleren Datenraten sowie der vom Decoder 130 stammenden Informationen über Sender, Genre und Start- und Stoppzeit möglich, den Speicherbedarf des Programmbeitrags zu ermitteln, der aufgezeichnet werden soll. Dazu multipliziert die Einrichtung 140 die gewichtete mittlere Datenrate des entsprechenden Genres bzw. des entsprechenden Senders mit der aus Start- und Stoppzeit ermittelten Zeitdauer des Programmbeitrags. Der derart bestimmte Speicherbedarf wird von der Einrichtung 140 mit dem noch auf der HD 160 zur Verfügung stehenden Speicherplatz verglichen.

Ist der noch zur Verfügung stehende Speicherplatz ausreichend, wird der Programmbeitrag aufgezeichnt. Reicht der Speicherplatz nicht aus, können verschiedene Vorgehensweisen vorgesehen werden.

Für den Fall, daß ein Benutzer während der Aufzeichnung anwesend bzw. erreichbar ist, kann von der Einrichtung 140 ein Hinweis erzeugt und beispielsweise auf dem Bildschirm bzw. Monitor eines an die Vorrichtung 100 direkt oder über ein Antennen- oder Bussystem angeschlossenen Femsehgeräts bzw. Computers dargestellt werden. Dabei kann dem Benutzer zu Wahl gestellt werden, die Aufzeichnung abzubrechen oder andere, bereits gespeicherte Programmbeiträge zu löschen. Dazu kann beispielsweise eine Liste von der Einrichtung 140 generiert werden, welche Angaben wie Titel, Tag der Aufzeichnung usw. enthält, um dem Benutzer die Auswahl des oder der zu löschenden bereits gespeicherten Programmbeiträge zu ermöglichen.

Eine andere Möglichkeit ist es, daß durch den Benutzer im voraus festgelegt wird, welche Programmbeiträge im Falle der Überschreitung der Speicherkapazität zu löschen sind. Kriterien für die Kennzeichnung der zu löschenden Programmbeiträge können beispielsweise das Alter des Programmbeitrags (Tag der Aufzeichnung), der Tag der letzten Wiedergabe des Programmbeitrags, die Häufigkeit der Wiedergabe der Programmbeiträge, das Genre des Programmbeitrags usw. sein. Zusätzlich kann eine benutzerorientierte Anpassung durch die Einrichtung 140 erfolgen, wenn das Verhalten des Benutzers protokolliert wird und dabei festgestellt wird, daß bestimmte Programmbeiträge, z. B. Sportsendungen, in der Regel nach einmaligem Sehen gelöscht werden. Derartige Programmbeiträge werden dann automatisch zum Löschen freigegeben.

Eine weitere Möglichkeit stellt die Auslagerung von Daten dar. Falls - wie bereits oben angedeutet - die Vorrichtung 100 über ein Bussystem mit Computern in Verbindung steht, können Daten von gespeicherten Programmbeiträgen von der HD 160 auf einen der angeschlossenen Computer oder auf ebenfalls angeschlossene Speichermedien wie Bandspeicher ausgelagert werden. In vorteilhafter Ausgestaltung der Erfindung erfolgt diese Auslagerung im offline-Betrieb. Hierdurch können auch langsamere Speichermedien genutzt werden. Der Benutzer kann dann endgültig über die ausgelagerten Programmbeiträge entscheiden.

Neben der oben beschriebenen Aufteilung des Speichermediums 160 sind andere Speicheraufteilungen möglich. Beispielsweise können die Bereiche 123 bis 143 jeweils getrennt für einen Programmbeitrag angelegt werden, so daß beispielsweise die Daten eines Programmbeitrags an die Daten eines anderen anschließen. Die Bereiche 123 bis 143 können aber auch derart angelegt werden, daß innerhalb der einzelnen Bereiche die Daten eines Programmbeitrags für diesen Bereich an die Daten eines nachfolgend aufgezeichneten Programmbeitrags angrenzen.

Die oben anhand von MPEG-codierten digitalen audiovisuellen Daten beschriebene Vorrichtung zur Aufnahme und Wiedergabe kann entsprechend auch nur für codierte digitale Audiodaten verwendet werden, um beispielsweise Radioprogramme aufzuzeichnen.

## Patentansprüche

1. Vorrichtung zur Aufzeichnung von codierten digitalen audiovisuellen Daten, welche aufweist:
- ein Massenspeichermedium (160) zur Aufzeichnung von codierten audiovisuellen Programmdaten (123') schwankender Datenrate, die einen Programmbeitrag repräsentieren, in einem Speicherbereich (123),
- eine Einrichtung (140) zur laufenden Ermittlung einer momentanen Datenrate, zur Ermittlung einer mittleren Datenrate der Programmdaten und zur Bestimmung auf Basis der mittleren Datenrate, ob die zur Verfügung stehende Speicherkapazität des Massenspeichermediums (160) für die komplette Aufzeichnung der Programmdaten des Programmbeitrags ausreicht,
**dadurch gekennzeichnet, dass**
sie weiterhin aufweist:
einen Demultiplexer (120) zur Abtrennung der codierten digitalen audiovisuellen Programmdaten (123') schwankender Datenrate, die einen Programmbeitrag repräsentieren, aus einem Transportdatenstrom (110),
- einen mit dem Demultiplexer (120) verbundenen Programminformationsdecoder (130) zur Gewinnung von Programminformationen über den Programmbeitrag und
- einen im Massenspeichermedium (160) vorgesehen weiteren Speicherbereich (143), der zur Abspeicherung der in der Einrichtung (140) ermittelten momentanen Datenraten vorgesehen ist.

2. Vorrichtung nach Anspruch 1,
**dadurch gekennzeichnet, dass**
die Einrichtung (140) weiterhin dazu vorgesehen ist, eine einem Programmbeitrag zugehörige gewichtete mittlere Datenrate zu ermitteln.

3. Vorrichtung nach Anspruch 2,
**dadurch gekennzeichnet, dass**
die Einrichtung (140) weiterhin dazu vorgesehen ist, die gewichtete mittlere Datenrate mit vom Programminformationsdecoder (130) abgeleiteten informationen zu verknüpfen und dass der weitere Speicherbereich (143) des Speichermediums zur Abspeicherung der verknüpften Informationen vorgesehen ist.

4. Vorrichtung nach einem der vorhergehenden Ansprüche,
**dadurch gekennzeichnet, dass**
das Speichermedium (160) einen weiteren Speicherbereich (133) aufweist, der zur Abspeicherung der vom Programminformationsdecoder (130) abgeleiteten Programminformationen vorgesehen ist.

5. Vorrichtung nach Anspruch 4,
**dadurch gekennzeichnet, dass**
die Einrichtung (140) bei der Bestimmung der mittleren Datenrate eine mittlere Datenrate der im weiteren Speicherbereich (133) aufgezeichneten Daten berücksichtigt.

6. Vorrichtung nach einem der vorhergehenden Ansprüche,
**dadurch gekennzeichnet, dass**
die Einrichtung (140) ein Mikrocomputer ist.

7. Vorrichtung nach einem der vorhergehenden Ansprüche.
**dadurch gekennzeichnet, dass**
die codierten digitalen audiovisuellen Daten sowie die Programmdaten nach MPEG codiert sind.

8. Verfahren zur Aufzeichnung von codierten digitalen audiovisuellen Daten mit folgenden Schritten:
- Abtrennen von codierten digitalen audiovisuellen Programmdaten schwankender Datenrate, die einen Programmbeitrag repräsentieren, aus einem Transportdatenstrom,
- Weiterleiten der abgetrennten codierten digitalen audiovisuellen Programmdaten schwankender Datenrate an ein Massenspeichermedium (160),
- Aufzeichnen der abgetrennten codierten digitalen audiovisuellen Programmdaten in einem Speicherbereich (123) des Massenspeichermediums (160),
- Decodieren von aus dem Transportdatenstrom abgeleiteten Programminformationen über den Programmbeitrag,
- laufende Ermittlung einer momentanen Datenrate des Programmbeitrags durch Auswertung der Programmdaten und der Programminformationen und laufende Abspeicherung der ermittelten momentanen Datenraten in einem weiteren Speicherbereich (143) des Massenspeichermediums (160),
- Ermittlung einer mittleren Datenrate des Programmbeitrags durch Auswertung der momentanen Datenraten, und
- Bestimmung auf Basis der mittleren Datenrate, ob die zur Verfügung stehende Speicherkapazität des Massenspeichermediums für die komplette Aufzeichnung der Programmdaten des Programmbeitrags ausreicht.

9. Verfahren nach Anspruch 8,
**dadurch gekennzeichnet, dass**
die Programminformationen in einem weiteren Speicherbereich des Speichermediums aufgezeichnet werden und dass eine mittlere Datenrate der Programminformationen ermittelt wird.

10. Verfahren nach Anspruch 8 oder 9,
**dadurch gekennzeichnet, dass**
die Programmierinformationen mit der mittleren Datenrate verknüpft werden und dass die Bestimmung, ob die zur Verfügung stehende Speicherkapazität für die Aufzeichnung der Programmdaten eines Programmbeitrages ausreicht, anhand der mittleren Datenrate vorgenommen wird, die mit Programminformationen verknüpft ist

11. Verfahren nach einem der Ansprüche 8 -10,
**dadurch gekennzeichnet, dass**
eine gewichtete mittlere Datenrate ermittelt wird.

12. Vorrichtung nach Anspruch 8 - 11,
**dadurch gekennzeichnet, dass**
die codierten digitalen audiovisuellen Daten sowie die Programmdaten nach MPEG codiert sind.

13. Verfahren nach einem der Ansprüche 8 -12,
**dadurch gekennzeichnet, dass**
die Programminformationen ein Genre und/oder einen Sendemamen und/oder eine Start- und Stoppzeit für die Programmdaten eines Programmbeitrags umfassen.

14. Verfahren nach einem der Ansprüche 8 -13,
**dadurch gekennzeichnet, dass**
bei Überschreiten der zur Verfugung stehenden Speicherkapazität ein Wamhinweis erzeugt wird.

15. Verfahren nach einem der Ansprüche 8 -14,
**dadurch gekennzeichnet, dass**
bei Überschreiten der zur Verfügung stehenden Speicherkapazität die Aufzeichnung beendet wird.

16. Verfahren nach einem der Ansprüche 8 - 14,
**dadurch gekennzeichnet, dass**
bei Überschreiten der zur Verfügung stehenden Speicherkapazität mindestens ein bereits gespeicherter Programmbeitrag gelöscht wird.

17. Verfahren nach Anspruch 16,
**dadurch gekennzeichnet, dass**
der mindestens eine bereits gespeicherte Programmbeitrag von einem Benutzer ausgewählt und gelöscht wird.

18. Verfahren nach Anspruch 16.
**dadurch gekennzeichnet, dass**
der mindestens eine bereits gespeicherte Programmbeitrag von einerri Benutzer vorab ausgewählt wird und bei Überschreiten der zur Verfügung stehenden Speicherkapazität automatisch gelöscht wird.

## Claims

1. Device for recording coded digital audio-visual data, which comprises
- a mass memory medium (160) for recording, in a memory area (123), coded audio-visual programme data (123') of varying data rate representing a programme feature,
- means (140) for continuously determining a current data rate, for determining a mean data rate of the programme data and for determining, on the basis of the mean data rate, whether the available memory capacity of the mass memory medium (160) is adequate for the complete recording of the programme data of the programme feature,
**characterized in that**
it furthermore comprises
- a demultiplexer (120) for separating the coded digital audio-visual programme data (123') of varying data rate representing a programme feature from a transport data stream (110),
- a programme information decoder (130), connected to the demultiplexer (120), for extracting programme information items relating to the programme feature, and
- a further memory area (143) that is provided in the mass memory medium (160) and that is provided for storing the current data rate determined in the means (140).

2. Device according to Claim 1, **characterized in that** the means (140) is furthermore provided to determine a weighted mean data rate associated with a programme feature.

3. Device according to Claim 2, **characterized in that** the means (140) is furthermore provided to combine the weighted mean data rate with information items derived from the programme information decoder (130) and **in that** the further memory area (143) of the memory medium is provided for storing the combined information items.

4. Device according to any one of the preceding claims, **characterized in that** the memory medium (160) comprises a further memory area (133) that is provided for storing the programme information items derived from the programme information decoder (130).

5. Device according to Claim 4, **characterized in that** the means (140) takes into account a mean data rate of the data recorded in the further memory area (133) in the determination of the mean data rate.

6. Device according to any one of the preceding claims, **characterized in that** the means (140) is a microcomputer.

7. Device according to any one of the preceding claims, **characterized in that** the coded digital audio-visual data and the programme data are coded according to the MPEG.

8. Method of recording coded digital audio-visual data comprising the following steps:
- separation of coded digital audio-visual programming data of varying data rate representing a programme feature from a transport data stream,
- routing the separated coded digital audio-visual programme data of varying data rate to a mass memory medium (160),
- recording of the separated coded digital audio-visual programme data in a memory area (123) of the mass memory medium (160),
- decoding of programme information items, derived from the transport data stream, relating to the programme feature,
- continuous determination of a current data rate of the programme feature by evaluating the programme data and the programme information items and continuous storage of the current data rate determined in a further memory area (143) of the mass memory medium (160),
- determination of a mean data rate of the programme feature by evaluating the current data rate, and
- determination on the basis of the mean data rate of whether the available memory capacity of the mass memory medium is adequate for the complete recording of the programme data of the programme feature.

9. Method according to Claim 8, **characterized in that** the programme information items are recorded in a further memory area of the memory medium and that a mean data rate of the programme information items is determined.

10. Method according to Claim 8 or 9, **characterized in that** the programming information items are combined with the mean data rate and **in that** the determination of whether the available memory capacity is adequate for the recording of the programme data of a programme feature is undertaken on the basis of the mean data rate combined with the programme information items.

11. Method according to any one of Claims 8-10, **characterized in that** a weighted mean data rate is determined.

12. Method according to Claims 8-11, **characterized in that** the coded digital audio-visual data and the programme data are coded according to the MPEG.

13. Method according to any one of Claims 8-12, **characterized in that** the programme information items comprise a genre and/or a transmitter name and/or a start and stop time for the programme data of a programme feature.

14. Method according to any one of Claims 8-13, **characterized in that** a warning signal is generated if the available memory capacity is exceeded.

15. Method according to any one of Claims 8-14, **characterized in that** the recording is terminated if the available memory capacity is exceeded.

16. Method according to any one of Claims 8-14,
**characterized in that** at least one already stored programme feature is erased if the available memory capacity is exceeded.

17. Method according to Claim 16, **characterized in that** the at least one already stored programme feature is selected by a user and erased.

18. Method according to Claim 16, **characterized in that** the at least one already stored programme feature is preselected by a user and is automatically erased if the available memory capacity is exceeded.

## Revendications

1. Dispositif d'enregistrement de données audiovisuelles numériques codées, qui comporte :
- un milieu de mémoire de masse (160) pour enregistrer des données audiovisuelles codées de programme (123') ayant une cadence variable de données et qui représentent une partie de programme, dans une zone de mémoire (123),
- un dispositif (140) pour déterminer en permanence une cadence instantanée de données pour la détermination de la cadence moyenne des données de programme et pour déterminer sur la base de la cadence moyenne de données si la capacité de mémoire disponible du milieu de mémoire de masse (160) est suffisante pour l'enregistrement complet des données de programme de la partie de programme,
**caractérisé en ce qu'**il comporte en outre :
- un démultiplexeur (120) servant à séparer les données numériques audiovisuelles codées de programme (123) ayant une cadence variable de données et qui représentent une partie de programme, à partir d'un flux de données de transport (110),
- un décodeur d'informations de programme (130), qui est relié au démultiplexeur (120), pour obtenir des informations de programme concernant la partie de programme, et
- une autre zone de mémoire (143), qui est prévue dans le milieu de mémoire de masse (160) et est prévue pour mémoriser les cadences instantanées de données déterminées dans le dispositif (140).

2. Dispositif selon la revendication 1, **caractérisé en ce que** le dispositif (140) est en outre prévu pour déterminer une cadence moyenne pondérée de données associée à une partie de programme.

3. Dispositif selon la revendication 2, **caractérisé en ce que** le dispositif est en outre prévu pour combiner la cadence moyenne pondérée de données à des informations délivrées par le décodeur (103) d'informations de programme, et que l'autre zone de mémoire (143) du milieu de mémoire est prévue pour mémoriser les informations combinées.

4. Dispositif selon l'une des revendications précédentes, **caractérisé en ce que** le milieu de mémoire (160) comporte une autre zone de mémoire (133), qui est prévue pour la mémorisation des informations de programme dérivées du décodeur (130) d'informations de programme.

5. Dispositif selon la revendication 4, **caractérisé en ce que** lors de la détermination de la cadence moyenne de données, le dispositif (140) prend en compte une cadence moyenne des données enregistrées dans l'autre zone de mémoire (133).

6. Dispositif selon l'une des revendications précédentes, **caractérisé en ce que** le dispositif (140) est un micro-ordinateur.

7. Dispositif selon l'une des revendications précédentes, **caractérisé en ce que** les données audiovisuelles numériques codées et les données de programme sont codées selon le système MPEG.

8. Procédé pour enregistrer des données audiovisuelles numériques codées comprenant les étapes consistant à :
- séparer des données audiovisuelles numériques codées de programmes ayant une cadence variable de données et qui représentent une partie de programme, à partir d'un flux de données de transport,
- transmettre les données numériques audiovisuelles codées numériques séparées de programme ayant des cadences variables de données à un milieu de mémoire de masse (160),
- enregistrer les données audiovisuelles codées numériques séparées de programme dans une zone de mémoire (123) du milieu de mémoire de masse (160),
- décoder des informations de programme dérivées du flux de données de transport, concernant la partie de programme,
- déterminer en permanence une cadence instantanée de données de la partie de programme par évaluation des données de programme et des informations de programme et mémoriser en permanence des cadences instantanées déterminées de données dans une autre zone de mémoire (143) du milieu de mémoire de masse (160),
- déterminer une cadence moyenne de données de la partie de programme par évaluation des cadences instantanées de données, et
- déterminer, sur la base de la cadence moyenne de données, si la capacité de mémoire disponible du milieu de mémoire de masse est suffisante pour l'enregistrement complet des données de programme de la partie de programme.

9. Procédé selon la revendication 8, **caractérisé en ce que** les informations de programme sont enregistrées dans une autre zone de mémoire du milieu de mémoire et qu'une cadence moyenne des données des informations de programme est déterminée.

10. Procédé selon la revendication 8 ou 9, **caractérisé en ce que** les informations de programmation de la cadence moyenne de données sont combinées et que la détermination pour savoir si la capacité de mémoire disponible suffit pour l'enregistrement des données de programme d'une partie de programme, est réalisée sur la base de la cadence moyenne de données, qui est combinée à des informations de programme.

11. Procédé selon l'une des revendications 8 à 10, **caractérisé en ce qu'**on détermine une cadence moyenne pondérée de données.

12. Dispositif selon les revendications 8 à 11, **caractérisé en ce que** les données audiovisuelles numériques codées ainsi que les données de programme sont codées selon le système MPEG.

13. Procédé selon l'une des revendications 8 à 12, **caractérisé en ce que** les informations de programme comprennent un genre et/ou un nom d'émetteur et/ou un instant de démarrage et d'arrêt pour les données de programme d'une partie de programme.

14. Procédé selon l'une des revendications 8 à 13, **caractérisé en ce que** lors du dépassement de la capacité de mémoire disponible, une indication d'avertissement est produite.

15. Procédé selon l'une des revendications 8 à 14, **caractérisé en ce que** lors du dépassement de la capacité de mémoire disponible, l'enregistrement est arrêté.

16. Procédé selon l'une des revendications 8 à 14,
**caractérisé en ce que** lors du dépassement de la capacité de mémoire disponible, au moins une partie de programme déjà mémorisée est effacée.

17. Procédé selon la revendication 16, **caractérisé en ce que** la au moins une valeur de programme déjà mémorisée est sélectionnée et effacée par un utilisateur.

18. Procédé selon la revendication 16, **caractérisé en ce que** la au moins une partie de programme déjà mémorisée est préalablement sélectionnée par un utilisateur et est effacée automatiquement dans le cas d'un dépassement de la capacité de mémoire disponible.
